# EUROPEAN PATENT APPLICATION

(11) **EP 4 564 894 A1**
(43) Date of publication of application: **04.06.2025**
(21) Application number: 23845236.1
(22) Date of filing: 30.06.2023
(51) Int. Cl.: H04W 24/10

(54) **QOE MEASUREMENT CONFIGURATION INDICATION METHOD AND APPARATUS**

(30) Priority: 26.07.2022 CN 202210887861
(71) Applicant: Datang Mobile Communications Equipment Co., Ltd., Beijing 100085 (CN)
(72) Inventor: WANG, Ruiwei, Beijing 100085 (CN); NI, Chunlin, Beijing 100085 (CN); WANG, Haocheng, Beijing 100085 (CN)
(74) Representative: Cabinet Nony
(86) International application number: PCT/CN2023/104663
(87) International publication number: WO 2024/022023

(57) **Abstract**

Embodiments of the present disclosure provide a QoE measurement configuration indication method and apparatus. The method is applied to a user equipment (UE), and comprises: in the process of sending a completion message, sending first indication information to a target base station, the first indication information being used for indicating the target base station that the UE stores QoE measurement-related information of a first-type MBS service.

## Description

### CROSS-REFERENCES TO RELATED APPLICATIONS

The present application claims priority to Chinese patent application No. 202210887861.0 filed on July 26, 2022, entitled "QoE Measurement Configuration Indication Method and Apparatus", which is hereby incorporated by reference in its entirety.

### FIELD

The present application relates to the field of radio communication, and in particular, to methods for indicating quality of experience (QoE) measurement configuration, and devices.

### BACKGROUND

To improve user experience in multicast/broadcast service (MBS), a characteristic of quality of experience (QoE) measurement for MBS is introduced, where for a broadcast service, a terminal may record a QoE measurement report in an idle state and inactive state and report it after re-accessing to a network, to assist the network in optimizing the MBS.

In case that a management station needs to collect QoE measurements for specific user's broadcast services, the management station initiates an activation of signaling-based QoE measurement and configure that to a user equipment (UE) for collection. However, after the UE generates a measurement report and re-accesses to the network, in case that the network is currently collecting management-based QoE measurements, the network does not know that the UE is collecting signaling-based QoE measurements and may configure the UE to perform management-based QoE measurement, which causes a deletion of original signaling-based QoE measurement in the UE and leads to a failure in collecting the QoE measurements of the specific user by the management station.

### BRIEF SUMMARY

In response to the problems in the related art, embodiments of the present application provide methods for indicating quality of experience (QoE) measurement configuration, and devices.

An embodiment of the present application provides a method for indicating quality of experience (QoE) measurement configuration, performed by a user equipment (UE), and the method includes:
during a procedure of transmitting a complete message, transmitting first indication information to a target base station, where the first indication information is used to indicate that the UE stores a first type of QoE measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, during the procedure of transmitting the complete message, transmitting the first indication information to the target base station includes any of the following:
transmitting a radio resource control (RRC) connection establishment complete message to the target base station, where the RRC connection establishment complete message carries the first indication information;
transmitting a radio resource control (RRC) connection reconfiguration complete message to the target base station, where the RRC connection reconfiguration complete message carries the first indication information;
transmitting a radio resource control (RRC) connection resume complete message to the target base station, where the RRC connection resume complete message carries the first indication information; or
transmitting a radio resource control (RRC) connection re-establishment complete message to the target base station, where the RRC connection re-establishment complete message carries the first indication information.

An embodiment provides a method for indicating quality of experience (QoE) measurement configuration, performed by a target base station, and the method includes:
obtaining first indication information, where the first indication information is used to indicate that a user equipment (UE) stores a first type of QoE measurement association information for multicast and broadcast service (MBS); and
performing QoE measurement configuration based on the first indication information.

In an embodiment, obtaining the first indication information includes:
receiving the first indication information transmitted from the UE during a procedure of the UE transmitting a complete message; and/or
receiving a retrieve UE context response message transmitted from an old base station, where the retrieve UE context response message includes the first indication information.

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, receiving the first indication information transmitted from the UE during the procedure of the UE transmitting the complete message includes any of the following:
receiving a radio resource control (RRC) connection establishment complete message transmitted from the UE, where the RRC connection establishment complete message carries the first indication information;
receiving a radio resource control (RRC) connection reconfiguration complete message transmitted from the UE, where the RRC connection reconfiguration complete message carries the first indication information;
receiving a radio resource control (RRC) connection resume complete message transmitted from the UE, where the RRC connection resume complete message carries the first indication information; or
receiving a radio resource control (RRC) connection re-establishment complete message transmitted from the UE, where the RRC connection re-establishment complete message carries the first indication information.

In an embodiment, the method further includes:
in case that the first indication information includes the list of TMGIs, performing a second type of QoE measurement configuration for MBS for TMGIs that do not store the QoE measurement association information in the list of TMGIs.

In an embodiment, the method further includes:
in case that the first indication information includes the measurement duration and/or the remaining measurement duration, after waiting for a given duration, performing a second type of QoE measurement configuration for MBS for the UE, where the given duration is determined based on the measurement duration and/or the remaining measurement duration.

An embodiment of the present application provides a method for indicating quality of experience (QoE) measurement configuration, performed by an old base station, and the method includes:
transmitting first indication information to a target base station, where the first indication information is used to indicate that a user equipment (UE) stores a first type of QoE measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, transmitting the first indication information to the target base station includes:
transmitting a retrieve UE context response message to a target base station, where the retrieve UE context response message includes the first indication information.

An embodiment of the present application provides a user equipment (UE), including: a memory, a transceiver, and a processor,
where the memory is used for storing a computer program; the transceiver is used for receiving and transmitting data under control of the processor; and the processor is used for reading the computer program in the memory and performing the following operations:
during a procedure of transmitting a complete message, transmitting first indication information to a target base station, where the first indication information is used to indicate that the UE stores a first type of quality of experience (QoE) measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, during the procedure of transmitting the complete message, transmitting the first indication information to the target base station includes any of the following:
transmitting a radio resource control (RRC) connection establishment complete message to the target base station, where the RRC connection establishment complete message carries the first indication information;
transmitting a radio resource control (RRC) connection reconfiguration complete message to the target base station, where the RRC connection reconfiguration complete message carries the first indication information;
transmitting a radio resource control (RRC) connection resume complete message to the target base station, where the RRC connection resume complete message carries the first indication information; or
transmitting a radio resource control (RRC) connection re-establishment complete message to the target base station, where the RRC connection re-establishment complete message carries the first indication information.

An embodiment of the present application provides a target base station, including: a memory, a transceiver, and a processor,
where the memory is used for storing a computer program; the transceiver is used for receiving and transmitting data under control of the processor; and the processor is used for reading the computer program in the memory and performing the following operations:
obtaining first indication information, where the first indication information is used to indicate that a user equipment (UE) stores a first type of quality of experience (QoE) measurement association information for multicast and broadcast service (MBS); and
performing QoE measurement configuration based on the first indication information.

In an embodiment, obtaining the first indication information includes:
receiving the first indication information transmitted from the UE during a procedure of the UE transmitting a complete message; and/or
receiving a retrieve UE context response message transmitted from an old base station, where the retrieve UE context response message includes the first indication information.

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, receiving the first indication information transmitted from the UE during the procedure of the UE transmitting the complete message includes any of the following:
receiving a radio resource control (RRC) connection establishment complete message transmitted from the UE, where the RRC connection establishment complete message carries the first indication information;
receiving a radio resource control (RRC) connection reconfiguration complete message transmitted from the UE, where the RRC connection reconfiguration complete message carries the first indication information;
receiving a radio resource control (RRC) connection resume complete message transmitted from the UE, where the RRC connection resume complete message carries the first indication information; or
receiving a radio resource control (RRC) connection re-establishment complete message transmitted from the UE, where the RRC connection re-establishment complete message carries the first indication information.

In an embodiment, the operations further include:
in case that the first indication information includes the list of TMGIs, performing a second type of QoE measurement configuration for MBS for TMGIs that do not store the QoE measurement association information in the list of TMGIs.

In an embodiment, the operations further include:
in case that the first indication information includes the measurement duration and/or the remaining measurement duration, after waiting for a given duration, performing a second type of QoE measurement configuration for MBS for the UE, where the given duration is determined based on the measurement duration and/or the remaining measurement duration.

An embodiment of the present application provides an old base station, including: a memory, a transceiver, and a processor,
where the memory is used for storing a computer program; the transceiver is used for receiving and transmitting data under control of the processor; and the processor is used for reading the computer program in the memory and performing the following operations:
transmitting first indication information to a target base station, where the first indication information is used to indicate that a user equipment (UE) stores a first type of quality of experience (QoE) measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, transmitting the first indication information to the target base station includes:
transmitting a retrieve UE context response message to a target base station, where the retrieve UE context response message includes the first indication information.

An embodiment of the present application provides a user equipment (UE), including:
a first transmitting module, used for transmitting, during a procedure of transmitting a complete message, first indication information to a target base station, where the first indication information is used to indicate that the UE stores a first type of QoE measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, the first transmitting module is used for any of the following:
transmitting a radio resource control (RRC) connection establishment complete message to the target base station, where the RRC connection establishment complete message carries the first indication information;
transmitting a radio resource control (RRC) connection reconfiguration complete message to the target base station, where the RRC connection reconfiguration complete message carries the first indication information;
transmitting a radio resource control (RRC) connection resume complete message to the target base station, where the RRC connection resume complete message carries the first indication information; or
transmitting a radio resource control (RRC) connection re-establishment complete message to the target base station, where the RRC connection re-establishment complete message carries the first indication information.

An embodiment of the present application provides a target base station, including:
an obtaining module, used for obtaining first indication information, where the first indication information is used to indicate that a user equipment (UE) stores a first type of QoE measurement association information for multicast and broadcast service (MBS); and
a processing module, used for performing QoE measurement configuration based on the first indication information.

In an embodiment, the obtaining module is used for:
receiving the first indication information transmitted from the UE during a procedure of the UE transmitting a complete message; and/or
receiving a retrieve UE context response message transmitted from an old base station, where the retrieve UE context response message includes the first indication information.

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, the obtaining module is used for any of the following:
receiving a radio resource control (RRC) connection establishment complete message transmitted from the UE, where the RRC connection establishment complete message carries the first indication information;
receiving a radio resource control (RRC) connection reconfiguration complete message transmitted from the UE, where the RRC connection reconfiguration complete message carries the first indication information;
receiving a radio resource control (RRC) connection resume complete message transmitted from the UE, where the RRC connection resume complete message carries the first indication information; or
receiving a radio resource control (RRC) connection re-establishment complete message transmitted from the UE, where the RRC connection re-establishment complete message carries the first indication information.

In an embodiment, the processing module is further used for:
in case that the first indication information includes the list of TMGIs, performing a second type of QoE measurement configuration for MBS for TMGIs that do not store the QoE measurement association information in the list of TMGIs.

In an embodiment, the processing module is further used for:
in case that the first indication information includes the measurement duration and/or the remaining measurement duration, after waiting for a given duration, performing a second type of QoE measurement configuration for MBS for the UE, where the given duration is determined based on the measurement duration and/or the remaining measurement duration.

An embodiment of the present application provides an old base station, including:
a second transmitting module, used for transmitting first indication information to a target base station, where the first indication information is used to indicate that a user equipment (UE) stores a first type of quality of experience (QoE) measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, the second transmitting module is used for:
transmitting a retrieve UE context response message to a target base station, where the retrieve UE context response message includes the first indication information.

An embodiment of the present application further provides a processor readable storage medium storing a computer program for causing a processor to perform any of the methods for indicating quality of experience (QoE) measurement configuration described above.

In the methods for indicating QoE measurement configuration and devices provided by the embodiments of the present application, by notifying the target base station that the UE currently stores signaling-based QoE measurement association information for MBS, the target base station is avoided from overriding signaling-based QoE measurement for MBS existed in UE, a problem of conflict between signaling-based QoE measurement for MBS and management-based QoE measurement for MBS is solved.

### BRIEF DESCRIPTION OF THE DRAWINGS

To clearly illustrate the solutions in the embodiments of the present application or in the related art, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a quality of experience (QoE) measurement procedure in related art;
FIG. 2 is a first schematic flowchart of a method for indicating QoE measurement configuration according to an embodiment of the present application;
FIG. 3 is a second schematic flowchart of a method for indicating QoE measurement configuration according to an embodiment of the present application;
FIG. 4 is a third schematic flowchart of a method for indicating QoE measurement configuration according to an embodiment of the present application;
FIG. 5 is a fourth schematic flowchart of a method for indicating QoE measurement configuration according to an embodiment of the present application;
FIG. 6 is a fifth schematic flowchart of a method for indicating QoE measurement configuration according to an embodiment of the present application;
FIG. 7 is a first schematic structural diagram of a user equipment according to an embodiment of the present application;
FIG. 8 is a first schematic structural diagram of a target base station according to an embodiment of the present application;
FIG. 9 is a first schematic structural diagram of an old base station according to an embodiment of the present application;
FIG. 10 is a second schematic structural diagram of a user equipment according to an embodiment of the present application;
FIG. 11 is a second schematic structural diagram of a target base station according to an embodiment of the present application; and
FIG. 12 is a second schematic structural diagram of an old base station according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art based on the embodiments of the present application without any creative effort belong to the scope of the present application.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The relevant content is introduced as follows before describing the embodiments of the present application.

### (1) Multicast/Broadcast Service (MBS)

At present, most of the communication between a network and a user equipment (UE) is in a type of unicast, that is, a type of one-to-one. To support one-to-many communication and avoid network resource consumption, multicast and broadcast are introduced.

For multicast services, the same services and content are provided to a group of designated users at the same time, and the UE may receive multicast services in a connected state. For a base station that supports multicast, the base station may use a set of common resources to provide services for a specific group of UEs. In case that the UE hands over to a base station that does not support multicast, since MBS radio bearer (MRB) cannot be established, services may only continue to be provided through UE specific data radio bearer (DRB), that is, multicast service content is delivered in unicast.

For broadcast services, the same services and content are provided to all UEs in a specific area. The UEs may receive broadcast services in idle state, inactive state or connected state. In case that the UE moves in the connected state, it is necessary to ensure the continuity of broadcast service of the UE and select a cell that supports the same service as the target cell.

Base stations may already exchange information of whether neighboring cells support multicast and broadcast through interfaces, which includes information of whether broadcast and/or multicast is supported and information of specific service type. The service type may be identified by using temporary mobile group identity (TMGI), or service area identity (SAI).

The UE may receive broadcast services in idle state. Since cell reselection in idle state needs to consider selecting a cell that supports broadcast services, in case that the UE is receiving broadcast services or intends to receive a broadcast service, cell reselection frequency priority may be set to high priority.

### (2) Quality of Experience (QoE) Measurement Procedure

The protocol defines two types of QoE measurements. One type is signaling-based, with a procedure that operation administration and maintenance (OAM) transmits QoE configuration to a core network (CN), the CN transmits the QoE configuration to a radio access network (RAN) side, and RAN side forwards the QoE configuration to the UE. The configuration in signaling-based is for specific UE. Another type is management-based, with a procedure that the OAM directly transmits QoE configuration to the RAN side and the RAN side forwards the QoE configuration to a UE. In management-based, it is currently configured for multiple UEs. In the two system frameworks of signaling-based measurement configuration and management-based measurement configuration, the procedures of the RAN side transmitting the QoE configuration to the UE are the same, and the configuration parameters are also the same. Both of them transmits the QoE configuration to the UE through radio resource control (RRC) signaling. signaling-based measurement is generally used for measurement collection of designated user, and management-based measurement is generally used for measurement collection of designated area.

R16 protocol version defines QoE measurement management parameters, including the following (not all listed).

### (a) QoE collection entity address

This is a parameter which defines the IP address to which the quality management center (QMC) records shall be transferred. Either Ipv4 address or Ipv6 address may be used.

### (b) QoE reference

This parameter specifies the network request session. The QoE reference shall be globally unique therefore it is composed as follows:
mobile country code (MCC) + mobile network code (MNC) + QMC ID, where the MCC and MNC are coming with trace activation request from the management system to identify one public land mobile network (PLMN) containing the management system, and QMC ID is a 3 byte Octet String.

### (c) QMC configuration file

QMC configuration file is QoE configuration file defined by application layer service.

### (d) Service type

Defined service types for QoE measurement, including streaming media, multimedia telephony service for IP multimedia subsystem (IMS) (MTSI), etc.

After an access stratum (AS) layer of the UE receives the QoE configuration through an RRC message, the AS layer transmits the QoE configuration to an application layer through a directory defined by ATtention command (AT command), including the parameters of service type, QoE reference and QMC configuration file. In case that the service of the service type corresponding to the configuration starts to occur, the application layer starts to perform measurement based on the configuration file and generates a QoE measurement report based on configuration conditions. Once the QoE measurement report is generated, the application layer of the UE transmits the QoE report to the AS layer of the UE through the AT command, and the AS layer of the UE transmits the QoE report to RAN through an RRC message. RAN transmits the report to a server corresponding to the IP address defined in the configuration file. Then, the procedures of QoE configuration and measurement report collection are completed.

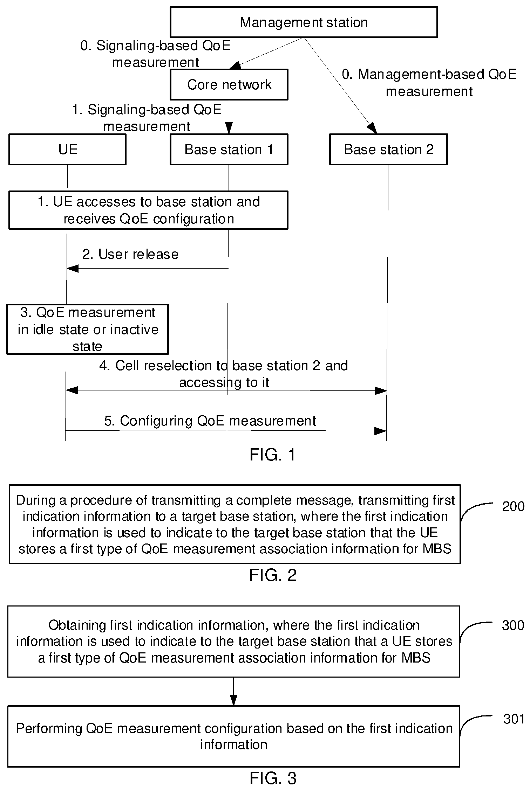

FIG. 1 is a schematic diagram of a quality of experience (QoE) measurement procedure in related art. As shown in FIG. 1, the procedure includes the following steps.

Step 0: A management station triggers signaling-based QoE measurement for MBS to collect QoE measurement results of MBS of designated users. The management station also triggers management-based QoE measurement for MBS to collect QoE measurements of MBS in a specific area. Since base station 2 corresponds to this area, the management station transmits the QoE measurement configuration to base station 2, and base station 2 selects accessed UE to perform QoE measurement configuration.

Step 1: The UE accesses to base station 1. The core network finds that it is a user corresponding to the signaling-based QoE measurement, transmits the signaling-based QoE measurement configuration to base station 1, and base station 1 configures it to the UE.

Step 2: The UE receives a release message from base station 1 and enters an idle state or an inactive state.

Step 3: The UE in idle state or inactive state may receive broadcast services and may record the QoE measurement report for the MBS.

Step 4: The UE performs cell reselection to establish a connection with base station 2.

Step 5: Since base station 2 receives the management-based QoE measurement for MBS from the management station, base station 2 may select the UE to configure QoE measurement. The original signaling-based QoE measurement of the UE is overridden by the management-based QoE measurement for MBS.

The management station triggers the signaling-based QoE measurement for MBS to collect the QoE measurement results for the MBS of designed users. However, in case that the user enters an area for collection of management-based QoE measurement for MBS, it will result in that the management station fails to collect the signaling-based QoE measurement for MBS. Each embodiment provided by the present application is to provide a solution to a problem of conflict between the signaling-based QoE measurement for MBS and management-based QoE measurement for MBS.

FIG. 2 is a first schematic flowchart of a method for indicating quality of experience (QoE) measurement configuration according to an embodiment of the present application. As shown in FIG. 2, the method may be performed by a user equipment (UE). The method includes the following step:
step 200: during a procedure of transmitting a complete message, transmitting first indication information to a target base station, where the first indication information is used to indicate to the target base station that the UE stores a first type of QoE measurement association information for multicast and broadcast service (MBS).

For example, the UE first accesses base station 1 (i. e. the old base station) and receives signaling-based QoE measurement configuration transmitted from base station 1. After base station 1 releases the UE, the UE in idle state and inactive state may perform QoE measurement based on the signaling-based QoE measurement configuration transmitted from base station 1, and obtain a corresponding QoE measurement report. Subsequently, due to a signal quality problem, a cell reselection procedure is performed, the UE accesses base station 2 (i. e. the target base station), and a radio resource control (RRC) connection is established between the UE and the base station 2. Since the UE has previously received the signaling-based QoE measurement configuration transmitted from base station 1, to avoid that base station 2 does not know this situation and transmits a new QoE measurement configuration (e.g. management-based QoE measurement configuration) to the UE, which may cause that the previous signaling-based QoE measurement configuration or signaling-based QoE measurement report is overridden and then the network side cannot obtain the signaling-based QoE measurement report obtained by the UE, the UE notifies base station 2 that the UE stores the first type of QoE measurement association information for MBS in the embodiments of the present application. In an embodiment, the first type here may be a signaling-based type, and may also be a management-based type in other feasible embodiments. Each embodiment of the present application is explained by taking the first type as a signaling-based as an example.

In an embodiment, the UE may transmit the first indication information to base station 2 during the procedure of transmitting the complete message, where a usage of the first indication information is to indicate (notify) base station 2 that the UE currently has stored the signaling-based QoE measurement association information for MBS. To avoid the signaling-based QoE measurement for MBS from being overridden, base station 2 does not transmit other types of QoE measurement configurations to the UE temporarily. For example, base station 2 does not transmit the management-based QoE measurement configuration. Base station 2 may transmit the new QoE measurement configuration to the UE until the UE completes the signaling-based QoE measurement and reports the QoE measurement report.

In the method for indicating QoE measurement configuration provided by the embodiment of the present application, by notifying the target base station that the UE currently stores the signaling-based QoE measurement association information for MBS, to avoid the target base station from overriding signaling-based QoE measurement for MBS existed in UE, a problem of conflict between signaling-based QoE measurement for MBS and management-based QoE measurement for MBS is solved.

In an embodiment, the first indication information transmitted from the UE to base station 2 may be transmitted in case of transmitting the complete message, that is, the first indication information and the complete message may be transmitted simultaneously, or the first indication information and the complete message may be transmitted at different times; the first indication information may be transmitted by being carried in the complete message, or the first indication information may be transmitted separately, which is not limited in the embodiments of the present application.

Several feasible transmissions are provided below, but not limited to:
the UE transmits an RRC connection establishment complete message to the target base station, where the RRC connection establishment complete message carries the first indication information;
the UE transmits an RRC connection reconfiguration complete message to the target base station, where the RRC connection reconfiguration complete message carries the first indication information;
the UE transmits an RRC connection resume complete message to the target base station, where the RRC connection resume complete message carries the first indication information; or
the UE transmits an RRC connection re-establishment complete message to the target base station, where the RRC connection re-establishment complete message carries the first indication information.

In the embodiments of the present application, the first instruction information may be carried in a variety of complete messages, increasing the application scenarios of the present application.

In an embodiment, the QoE measurement association information may include: the first type of QoE measurement report for MBS; and/or the first type of QoE measurement configuration for MBS. For example, the QoE measurement association information includes signaling-based QoE measurement report for MBS, or the QoE measurement association information includes signaling-based QoE measurement configuration for MBS, or the QoE measurement association information includes both the signaling-based QoE measurement report for MBS and the signaling-based QoE measurement configuration for MBS.

In an embodiment, the first indication information includes any one or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In the method for indicating QoE measurement configuration provided by the embodiment of the present application, multiple indication modes or any combination thereof may be used to transmit the first indication information, which increases the flexibility and scalability of the present application.

FIG. 3 is a second schematic flowchart of a method for indicating quality of experience (QoE) measurement configuration according to an embodiment of the present application. As shown in FIG. 3, the method may be performed by a target base station, that is, base station 2. The method includes the following steps:
step 300: obtaining first indication information, where the first indication information is used to indicate to the target base station that a user equipment (UE) stores a first type of QoE measurement association information for multicast and broadcast service (MBS); and
step 301: performing QoE measurement configuration based on the first indication information.

After the UE accesses to base station 2 through cell reselection, in an embodiment of the present application, base station 2 first obtains the first indication information, and based on the first indication information, base station 2 may know that the UE currently stores signaling-based QoE measurement association information for MBS. After base station 2 knows the above information, base station 2 may perform corresponding QoE measurement configuration for the UE based on the first indication information. For example, in order to avoid overriding the current signaling-based QoE measurement, base station 2 may not perform new QoE measurement configuration for the UE temporarily, and may transmit new QoE measurement configuration to the UE after the UE completes the signaling-based QoE measurement configuration and reports the corresponding QoE measurement report.

In an embodiment, the first indication information obtained by base station 2 may be actively reported from the UE or may be transmitted form base station 1. In an embodiment, base station 2 obtains the first indication information through:
base station 2 receives the first indication information transmitted from the UE during a procedure of the UE transmitting a complete message; and/or
base station 2 receives a retrieve UE context response message transmitted from base station 1, where the retrieve UE context response message includes the first indication information.

In an embodiment, the QoE measurement association information may include: the first type of QoE measurement report for MBS; and/or the first type of QoE measurement configuration for MBS. For example, the QoE measurement association information includes signaling-based QoE measurement report for MBS, or the QoE measurement association information includes signaling-based QoE measurement configuration for MBS, or the QoE measurement association information includes both the signaling-based QoE measurement report for MBS and the signaling-based QoE measurement configuration for MBS.

In an embodiment, the first indication information includes any one or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, in case that the first indication information includes the list of TMGIs, base station 2 may perform management-based QoE measurement configuration for MBS for TMGIs that do not store QoE measurement association information in the list of TMGIs.

In an embodiment, in case that the first indication information includes the measurement duration and/or the remaining measurement duration, after waiting for a given duration, base station 2 may perform management-based QoE measurement configuration for MBS for the UE, where the given duration may be determined based on the measurement duration and/or the remaining measurement duration.

In an embodiment, the first indication information transmitted from the UE to base station 2 may be transmitted in case of transmitting the complete message, that is, the first indication information and the complete message may be transmitted simultaneously, or the first indication information and the complete message may be transmitted at different times; the first indication information may be transmitted by being carried in the complete message, or the first indication information may be transmitted separately, which is not limited in the embodiments of the present application.

For the case that base station 2 receives the first indication information transmitted from the UE during the procedure of transmitting the complete message, several feasible transmissions are provided below, but not limited to:
the UE transmits an RRC connection establishment complete message to the target base station, where the RRC connection establishment complete message carries the first indication information;
the UE transmits an RRC connection reconfiguration complete message to the target base station, where the RRC connection reconfiguration complete message carries the first indication information;
the UE transmits an RRC connection resume complete message to the target base station, where the RRC connection resume complete message carries the first indication information; or
the UE transmits an RRC connection re-establishment complete message to the target base station, where the RRC connection re-establishment complete message carries the first indication information.

The effects provided by the method for indicating QoE measurement configuration provided by the embodiments of the present application may be referred to the effects of the above embodiments, and are not described again here.

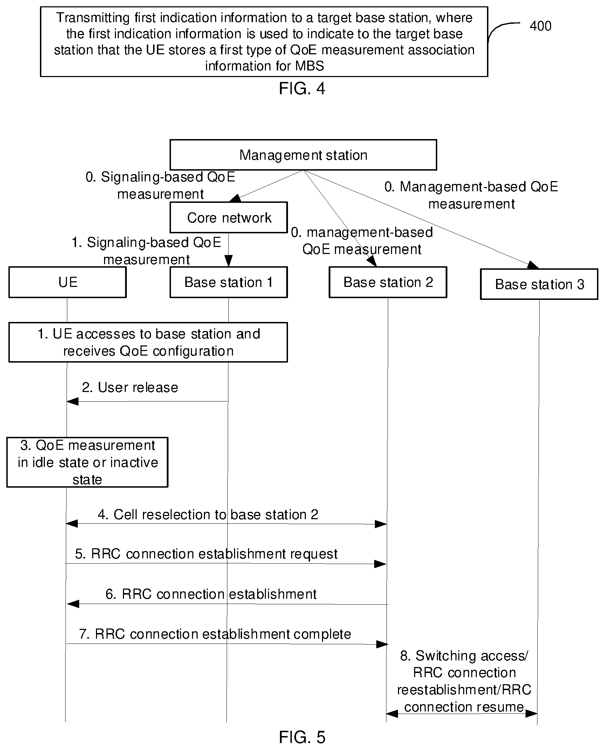

FIG. 4 is a third schematic flowchart of a method for indicating quality of experience (QoE) measurement configuration according to an embodiment of the present application. As shown in FIG. 4, the method may be performed by an old base station, that is, base station 1. The method includes the following step:
step 400: transmitting first indication information to a target base station, where the first indication information is used to indicate to the target base station that the UE stores a first type of QoE measurement association information for multicast and broadcast service (MBS).

In an embodiment of the present application, to avoid overriding the current signaling-based QoE measurement, base station 1 may transmit the first indication information to base station 2 to notify base station 2 that the UE currently stores signaling-based QoE measurement association information for MBS.

In an embodiment, after the UE accesses base station 2 through cell reselection, base station 2 may transmit a request to obtain UE context to base station 1, to request base station 1 to transmit the UE context of the UE to base station 2. Base station 1 may carry the first indication information in a retrieve UE context response message and transmit the retrieve UE context response message to base station 2. The first indication information may also be transmitted to base station 2 in other ways, for example, the first indication information may be carried in other messages, or may be transmitted separately to base station 2, which is not limited in the embodiments of the present application.

In an embodiment, the QoE measurement association information may include: the first type of QoE measurement report for MBS; and/or the first type of QoE measurement configuration for MBS. For example, the QoE measurement association information includes signaling-based QoE measurement report for MBS, or the QoE measurement association information includes signaling-based QoE measurement configuration for MBS, or the QoE measurement association information includes both the signaling-based QoE measurement report for MBS and the signaling-based QoE measurement configuration for MBS.

In an embodiment, the first indication information includes any one or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

The effects provided by the method for indicating QoE measurement configuration provided by the embodiments of the present application may be referred to the effects of the above embodiments, and are not described again here.

In each embodiment of the present application, in order to prevent base station 2 from overriding the signaling-based QoE measurement for MBS of the UE, base station 2 needs to be notified of the QoE measurement information for MBS of the UE. In an inactive state, base station 2 may interact with base station 1 through a retrieve UE context procedure, and base station 2 may be notified of the association information through enhanced retrieve UE context procedure. In an idle state, base station 2 cannot exchange specific information about the UE in idle state with base station 1, and may only be reported by the UE to obtain the association information. The following embodiments respectively describe the schemes of the UE reporting the indication information and the network interface transmitting the indication information in inactive state.

FIG. 5 is a fourth schematic flowchart of a method for indicating QoE measurement configuration according to an embodiment of the present application. The embodiment is a solution for the UE to report the first indication information. As shown in FIG. 5, the method includes the following steps.

Step 0: The management station triggers signaling-based QoE measurement for MBS to collect QoE measurement results for MBS of designated users. The management station also triggers management-based QoE measurement for MBS to collect QoE measurements for MBS in a specific area. Since base station 2 corresponds to this area, the management station transmits the QoE measurement configuration to base station 2, and base station 2 selects accessed UE to perform QoE measurement configuration. Base station 3 also corresponds to this area. The management station transmits the QoE measurement configuration to base station 3, and base station 3 selects accessed UE to perform QoE measurement configuration.

Step 1: The UE accesses to base station 1. The core network finds that it is a user corresponding to the signaling-based QoE measurement, transmits the signaling-based QoE measurement configuration to base station 1, and base station 1 configures it to the UE.

Step 2: The UE receives a release message from base station 1 and enters idle state or inactive state.

Step 3: The UE in idle state or inactive state may receive broadcast services and may record the QoE measurement report for the MBS.

Step 4: The UE reselects a cell for base station 2.

From step 5 to step 7, the UE successfully establishes an RRC connection with the cell under base station 2.

After the UE receives the RRC establishment message, when preparing to transmit the RRC connection establishment complete message: in case that the UE stores signaling-based QoE measurement report for MBS and/or stores signaling-based QoE measurement configuration for MBS, it is indicated in the RRC connection establishment complete message.

In an embodiment, the UE may indicate at least one of the following information in the RRC connection establishment complete message:
1) a service type, broadcast or multicast;
2) a list of TMGIs;
3) a measurement duration, which is the total duration of signaling-based QoE measurement for MBS;
4) a remaining measurement duration, which is a further needed duration for measurement since the QoE measurement may have been performed for a period of time;
5) whether the signaling-based QoE measurement configuration for MBS exists, that is, whether the UE still saves the signaling-based QoE measurement configuration for MBS; or
6) whether the signaling-based QoE measurement report for MBS exists, that is, whether the UE still saves the signaling-based QoE measurement report for MBS.

As such, in case that base station 2 finds that the UE has saved the signaling-based QoE measurement configuration for MBS and/or the signaling-based QoE measurement report for MBS, base station 2 avoids configuring management-based QoE measurement for MBS.

According to the TMGI information indicated by the UE, base station 2 may determine whether a TMGI saves the signaling-based QoE measurement configuration for MBS and/or the signaling-based QoE measurement report for MBS, and if other TMGIs do not conflict, base station 2 may continue to configure management-based QoE measurement for MBS.

Based on the measurement duration and the remaining measurement duration indicated by the UE, base station 2 may wait for a period of time before performing configuration.

The following describes a situation where after the UE accesses to base station 2, the UE hands over to base station 3 from base station 2. That is, an RRC connection reconfiguration complete message is transmitted to base station 3 at base station 3, to indicate that the handover is completed.

Similarly, after the UE accesses to base station 2, the UE may enter an inactive state, and then resume the connection at base station 3. That is, an RRC connection resume complete message is transmitted to base station 3 at base station 3, to indicate that the RRC connection resume is completed.

Similarly, for the UE, a radio link failure may occur at base station 2, and then the UE choose to re-establish an RRC connection at base station 3. That is, an RRC connection reestablishment complete message is transmitted to base station 3, to indicate that the RRC connection reestablishment is completed.

There is the same problem at base station 3 and base station 2. Base station 3 needs to know that the UE has been configured signaling-based QoE measurement for MBS to avoid configuring management-based QoE measurement for MBS.

Therefore, for the above-mentioned RRC connection reconfiguration complete message, the RRC connection resume complete message and the RRC connection reestablishment complete message, the same first indication information is needed to be added.

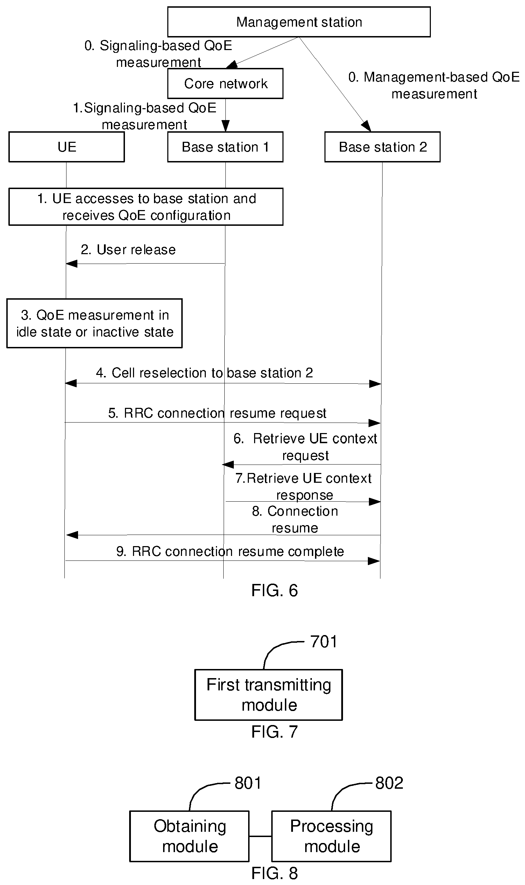

FIG. 6 is a fifth schematic flowchart of a method for indicating QoE measurement configuration according to an embodiment of the present application. The embodiment is a solution for transmitting the first indication information through a network interface in an inactive state. As shown in FIG. 6, the method includes the following steps.

Step 0: The management station triggers signaling-based QoE measurement for MBS to collect QoE measurement results of MBS of designated users. The management station also triggers management-based QoE measurement for MBS to collect QoE measurements for MBS in a specific area. Since base station 2 corresponds to this area, the management station transmits the QoE measurement configuration to base station 2, and base station 2 selects accessed UE to perform QoE measurement configuration.

Step 1: The UE accesses to base station 1. The core network finds that it is a user corresponding to the signaling-based QoE measurement, transmits the signaling-based QoE measurement configuration to base station 1, and base station 1 configures it to the UE.

Step 2: The UE is released to enter an inactive state.

Step 3: The UE in inactive state may receive broadcast services and may record the QoE measurement report of the MBS.

Step 4: The UE performs cell reselection to base station 2.

Step 5: The UE transmits an RRC connection resume request message at base station 2.

Step 6: Base station 2 transmits a retrieve UE context request message to base station 1.

Step 7: Base station 1 transmits the retrieve UE context response message to base station 2, where first indication information is needed to be added in this message, to indicate whether signaling-based QoE measurement for MBS is configured for the UE.

In an embodiment, the message may indicate at least one of the following information:
1) a service type, broadcast or multicast;
2) a list of TMGIs;
3) a measurement duration, which is the total duration of signaling-based QoE measurement for MBS; or
4) a remaining measurement duration, which is a further needed duration for measurement since the QoE measurement may have been performed for a period of time.

With the same function as the embodiment shown in FIG. 5 where signaling-based QoE measurement association indication for MBS is obtained from UE, management-based QoE measurement for MBS may be avoided to be reconfigured. The benefit effects of obtaining from the network interface is that it may reduce the consumption of air interface resources.

However, this scenario may also use the solutions shown in FIG. 5, that is, the first indication information is added to the RRC connection resume complete message in subsequent step 9.

FIG. 7 is a first schematic structural diagram of a user equipment (UE) according to an embodiment of the present application. As shown in FIG. 7, the UE includes a first transmitting module 701, which is used for transmitting, during a procedure of transmitting a complete message, first indication information to a target base station, where the first indication information is used to indicate that the UE stores a first type of quality of experience (QoE) measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, during the procedure of transmitting the complete message, transmitting the first indication information to the target base station includes any of the following:
transmitting a radio resource control (RRC) connection establishment complete message to the target base station, where the RRC connection establishment complete message carries the first indication information;
transmitting a radio resource control (RRC) connection reconfiguration complete message to the target base station, where the RRC connection reconfiguration complete message carries the first indication information;
transmitting a radio resource control (RRC) connection resume complete message to the target base station, where the RRC connection resume complete message carries the first indication information; or
transmitting a radio resource control (RRC) connection re-establishment complete message to the target base station, where the RRC connection re-establishment complete message carries the first indication information.

FIG. 8 is a first schematic structural diagram of a target base station according to an embodiment of the present application. As shown in FIG. 8, the target base station includes an obtaining module 801 and a processing module 802, where,
the obtaining module 801 is used for obtaining first indication information, where the first indication information is used to indicate that a user equipment (UE) stores a first type of quality of experience (QoE) measurement association information for multicast and broadcast service (MBS); and
the processing module 802 is used for performing QoE measurement configuration based on the first indication information.

In an embodiment, obtaining the first indication information includes:
receiving the first indication information transmitted from the UE during a procedure of the UE transmitting a complete message; and/or
receiving a retrieve UE context response message transmitted from an old base station, where the retrieve UE context response message includes the first indication information.

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, receiving the first indication information transmitted from the UE during a procedure of the UE transmitting a complete message includes any of the following:
receiving a radio resource control (RRC) connection establishment complete message transmitted from the UE, where the RRC connection establishment complete message carries the first indication information;
receiving a radio resource control (RRC) connection reconfiguration complete message transmitted from the UE, where the RRC connection reconfiguration complete message carries the first indication information;
receiving a radio resource control (RRC) connection resume complete message transmitted from the UE, where the RRC connection resume complete message carries the first indication information; or
receiving a radio resource control (RRC) connection re-establishment complete message transmitted from the UE, where the RRC connection re-establishment complete message carries the first indication information.

In an embodiment, the processing module is further used for:
in case that the first indication information includes the list of TMGIs, performing a second type of QoE measurement configuration for MBS for TMGIs that do not store the QoE measurement association information in the list of TMGIs.

In an embodiment, the processing module is further used for:
in case that the first indication information includes the measurement duration and/or the remaining measurement duration, after waiting for a given duration, performing a second type of QoE measurement configuration for MBS for the UE, where the given duration is determined based on the measurement duration and/or the remaining measurement duration.

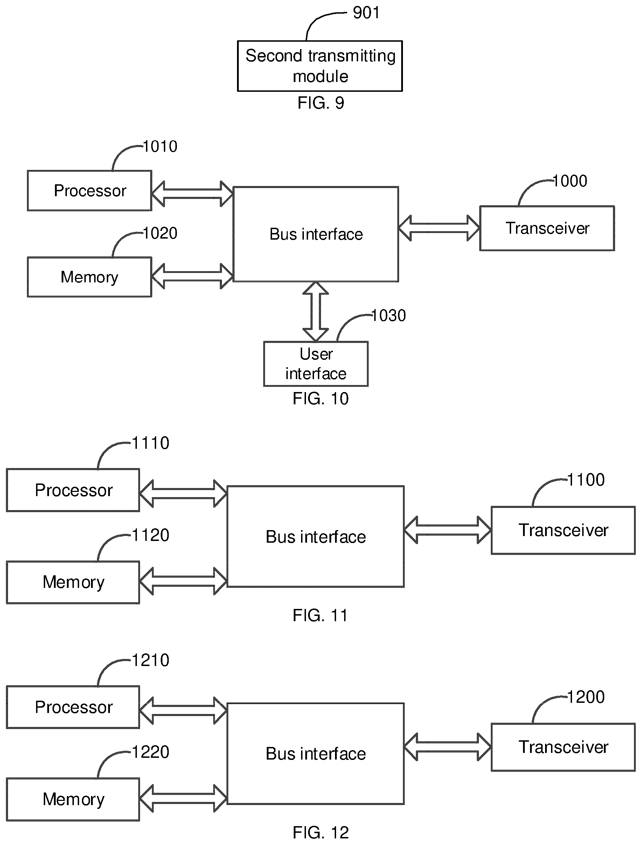

FIG. 9 is a first schematic structural diagram of an old base station according to an embodiment of the present application. As shown in FIG. 9, the old base station includes a second transmitting module 901, which is used for transmitting first indication information to a target base station, where the first indication information is used to indicate that a user equipment (UE) stores a first type of quality of experience (QoE) measurement association information for multicast and broadcast service (MBS).

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, transmitting the first indication information to the target base station includes:
transmitting a retrieve UE context response message to a target base station, where the retrieve UE context response message includes the first indication information.

In the embodiments of the present application, a new base station is notified that the UE currently stores signaling-based QoE measurement association information for MBS, to prevent the new base station from overriding signaling-based QoE measurement for MBS existed in UE. As such, a problem of conflict between signaling-based QoE measurement for MBS and management-based QoE measurement for MBS is solved.

The methods and the devices are based on the same conception. Since the principles of the methods and the devices to solve the problem are similar, the implementation of the devices and the methods may be referred to each other, and the details are not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

It should be noted here that the above-mentioned devices provided by the embodiments of the present application may implement all the method steps implemented by the above-mentioned method embodiments, and may achieve the same technical effects. The same parts and beneficial effects of the embodiments as the method embodiments are not repeated again.

FIG. 10 is a second schematic structural diagram of a user equipment (UE) according to an embodiment of the present application. As shown in FIG. 10, the UE includes a memory 1020, a transceiver 1000, and a processor 1010, where,
the memory 1020 is used for storing a computer program; the transceiver 1000 is used for receiving and transmitting data under control of the processor 1010; and the processor 1010 is used for reading the computer program in the memory 1020 and performing the following operations:
during a procedure of transmitting a complete message, transmitting first indication information to a target base station, where the first indication information is used to indicate that the UE stores a first type of quality of experience (QoE) measurement association information for multicast and broadcast service (MBS).

The transceiver 1000 is used for receiving and transmitting data under the control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. For different user equipment, a user interface 1030 may be an interface capable of externally or internally connecting the required equipment, and the connected equipment includes, but not limited to, a small keypad, a display, a speaker, a microphone, a joystick, and the like.

The processor 1010 is responsible for managing the bus architecture and general processing, and the memory 1020 may store data used by the processor 1010 when performing operations.

In an embodiment, the processor 1010 may be a central processing unit (CPU), an application specific integrated circuit (ASIC), a field-programmable gate array (FPGA), or a complex programmable logic device (CPLD), the processor may also use a multi-core architecture.

The processor is configured to execute any of the methods performed by the UE provided by the embodiments of the present application according to the obtained executable instructions by calling the computer program stored in the memory. The processor and memory may be physically separated.

In an embodiment, the QoE measurement association information includes:
a first type of QoE measurement report for MBS; and/or
a first type of QoE measurement configuration for MBS.

In an embodiment, first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, during the procedure of transmitting the complete message, transmitting the first indication information to the target base station includes any of the following:
transmitting a radio resource control (RRC) connection establishment complete message to the target base station, where the RRC connection establishment complete message carries the first indication information;
transmitting a radio resource control (RRC) connection reconfiguration complete message to the target base station, where the RRC connection reconfiguration complete message carries the first indication information;
transmitting a radio resource control (RRC) connection resume complete message to the target base station, where the RRC connection resume complete message carries the first indication information; or
transmitting a radio resource control (RRC) connection re-establishment complete message to the target base station, where the RRC connection re-establishment complete message carries the first indication information.

It should be noted here that the above-mentioned user equipment provided by the embodiments of the present application may implement all the method steps implemented by the above-mentioned method embodiments in which the execution subject is the user equipment, and may achieve the same technical effect. The same parts and the same beneficial effects as the method embodiments in the embodiments of the devices are not repeated again.

FIG. 11 is a second schematic structural diagram of a target base station according to an embodiment of the present application. As shown in FIG. 11, the target base station includes a memory 1120, a transceiver 1100, and a processor 1110, where,
the memory 1120 is used for storing a computer program; the transceiver 1100 is used for receiving and transmitting data under control of the processor 1110; and the processor 1110 is used for reading the computer program in the memory 1120 and performing the following operations:
obtaining first indication information, where the first indication information is used to indicate that a user equipment (UE) stores a first type of quality of experience (QoE) measurement association information for multicast and broadcast service (MBS); and
performing QoE measurement configuration based on the first indication information.

The transceiver 1100 is used for receiving and transmitting data under the control of the processor 1110.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field-programmable gate array (FPGA), or a complex programmable logic device (CPLD), the processor may also use a multi-core architecture.

In an embodiment, obtaining the first indication information includes:
receiving the first indication information transmitted from the UE during a procedure of the UE transmitting a complete message; and/or
receiving a retrieve UE context response message transmitted from an old base station, where the retrieve UE context response message includes the first indication information.

In an embodiment, the QoE measurement association information includes::
a first type of QoE measurement report for MBS; and/or
a first type of QoE measurement configuration for MBS.

In an embodiment, first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, receiving the first indication information transmitted from the UE during the procedure of the UE transmitting the complete message includes any of the following:
receiving a radio resource control (RRC) connection establishment complete message transmitted from the UE, where the RRC connection establishment complete message carries the first indication information;
receiving a radio resource control (RRC) connection reconfiguration complete message transmitted from the UE, where the RRC connection reconfiguration complete message carries the first indication information;
receiving a radio resource control (RRC) connection resume complete message transmitted from the UE, where the RRC connection resume complete message carries the first indication information; or
receiving a radio resource control (RRC) connection re-establishment complete message transmitted from the UE, where the RRC connection re-establishment complete message carries the first indication information.

In an embodiment, the operations further include:
in case that the first indication information includes the list of TMGIs, performing a second type of QoE measurement configuration for MBS for TMGIs that do not store the QoE measurement association information in the list of TMGIs.

In an embodiment, the operations further include:
in case that the first indication information includes the measurement duration and/or the remaining measurement duration, after waiting for a given duration, performing a second type of QoE measurement configuration for MBS for the UE, where the given duration is determined based on the measurement duration and/or the remaining measurement duration.

It should be noted here that the above-mentioned target base station provided by the embodiments of the present application may implement all the method steps implemented by the above-mentioned method embodiments in which the execution subject is the target base station, and may achieve the same technical effect. The same parts and the same beneficial effects as the method embodiments in the embodiments of the devices are not repeated again.

FIG. 12 is a second schematic structural diagram of an old base station according to an embodiment of the present application. As shown in FIG. 12, the old base station includes a memory 1220, a transceiver 1200, and a processor 1210, where,
the memory 1220 is used for storing a computer program; the transceiver 1200 is used for receiving and transmitting data under control of the processor 1210; and the processor 1210 is used for reading the computer program in the memory 1220 and performing the following operations:
transmitting first indication information to a target base station, where the first indication information is used to indicate that a user equipment (UE) stores a first type of quality of experience (QoE) measurement association information for multicast and broadcast service (MBS).

The transceiver 1200 is used for receiving and transmitting data under control of the processor 1210.

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field-programmable gate array (FPGA), or a complex programmable logic device (CPLD), the processor may also use a multi-core architecture.

In an embodiment, the QoE measurement association information includes:
a first type of QoE measurement report for MBS; and/or
a first type of QoE measurement configuration for MBS.

In an embodiment, the first indication information includes any or any combination of the following:
a service type;
a list of temporary mobile group identities (TMGIs);
a measurement duration;
a remaining measurement duration;
a first identifier, used to indicate whether signaling-based QoE measurement configuration for MBS exists; or
a second identifier, used to indicate whether signaling-based QoE measurement report for MBS exists.

In an embodiment, transmitting the first indication information to the target base station includes:
transmitting a retrieve UE context response message to a target base station, where the retrieve UE context response message includes the first indication information.

It should be noted here that the above-mentioned old base station provided by the embodiments of the present application may implement all the method steps implemented by the above-mentioned method embodiments in which the execution subject is the old base station, and may achieve the same technical effect. The same parts and the same beneficial effects as the method embodiments in the embodiments of the devices are not repeated again.

On the other hand, an embodiment of the present application provides a processor readable storage medium. The processor readable storage medium stores a computer program. The computer program is used to cause a processor to execute the method provided by the above embodiments, where the method includes:
during a procedure of transmitting a complete message, transmitting first indication information to a target base station, where the first indication information is used to indicate that the UE stores a first type of QoE measurement association information for multicast and broadcast service (MBS).

On the other hand, an embodiment of the present application provides a processor readable storage medium. The processor readable storage medium stores a computer program. The computer program is used to cause a processor to execute the method provided by the above embodiments, where the method includes:
obtaining first indication information, where the first indication information is used to indicate that a user equipment (UE) stores a first type of QoE measurement association information for multicast and broadcast service (MBS); and
performing QoE measurement configuration based on the first indication information.

On the other hand, an embodiment of the present application provides a processor readable storage medium. The processor readable storage medium stores a computer program. The computer program is used to cause a processor to execute the method provided by the above embodiments, where the method includes:
transmitting first indication information to a target base station, where the first indication information is used to indicate that a user equipment (UE) stores a first type of QoE measurement association information for multicast and broadcast service (MBS).

The processor readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for indicating quality of experience, QoE, measurement configuration, performed by a user equipment, UE, and the method comprising:
during a procedure of transmitting a complete message, transmitting first indication information to a target base station, wherein the first indication information is used to indicate that the UE stores a first type of QoE measurement association information for multicast and broadcast service, MBS.

2. The method of claim 1, wherein the QoE measurement association information comprises:
a first type of QoE measurement report for MBS; and/or
a first type of QoE measurement configuration for MBS.

3. The method of claim 1 or 2, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

4. The method of claim 1 or 2, wherein during the procedure of transmitting the complete message, transmitting the first indication information to the target base station comprises any of the following:
transmitting a radio resource control, RRC, connection establishment complete message to the target base station, wherein the RRC connection establishment complete message carries the first indication information;
transmitting a radio resource control, RRC, connection reconfiguration complete message to the target base station, wherein the RRC connection reconfiguration complete message carries the first indication information;
transmitting a radio resource control, RRC, connection resume complete message to the target base station, wherein the RRC connection resume complete message carries the first indication information; or
transmitting a radio resource control, RRC, connection re-establishment complete message to the target base station, wherein the RRC connection re-establishment complete message carries the first indication information.

5. A method for indicating quality of experience, QoE, measurement configuration, performed by a target base station, and the method comprising:
obtaining first indication information, wherein the first indication information is used to indicate that a user equipment, UE, stores a first type of QoE measurement association information for multicast and broadcast service, MBS; and
performing QoE measurement configuration based on the first indication information.

6. The method of claim 5, wherein obtaining the first indication information comprises:
receiving the first indication information transmitted from the UE during a procedure of the UE transmitting a complete message; and/or
receiving a retrieve UE context response message transmitted from an old base station, wherein the retrieve UE context response message comprises the first indication information.

7. The method of claim 5 or 6, wherein the QoE measurement association information comprises:
a first type of QoE measurement report for MBS; and/or
a first type of QoE measurement configuration for MBS.

8. The method of claim 5 or 6, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

9. The method of claim 6, wherein receiving the first indication information transmitted from the UE during the procedure of the UE transmitting the complete message comprises any of the following:
receiving a radio resource control, RRC, connection establishment complete message transmitted from the UE, wherein the RRC connection establishment complete message carries the first indication information;
receiving a radio resource control, RRC, connection reconfiguration complete message transmitted from the UE, wherein the RRC connection reconfiguration complete message carries the first indication information;
receiving a radio resource control, RRC, connection resume complete message transmitted from the UE, wherein the RRC connection resume complete message carries the first indication information; or
receiving a radio resource control, RRC, connection re-establishment complete message transmitted from the UE, wherein the RRC connection re-establishment complete message carries the first indication information.

10. The method of claim 8, further comprising:
in case that the first indication information comprises the list of TMGIs, performing a second type of QoE measurement configuration for MBS for TMGIs that do not store the QoE measurement association information in the list of TMGIs.

11. The method of claim 8, further comprising:
in case that the first indication information comprises the measurement duration and/or the remaining measurement duration, after waiting for a given duration, performing a second type of QoE measurement configuration for MBS for the UE, wherein the given duration is determined based on the measurement duration and/or the remaining measurement duration.

12. A method for indicating quality of experience, QoE, measurement configuration, performed by an old base station, and the method comprising:
transmitting first indication information to a target base station, wherein the first indication information is used to indicate that a user equipment, UE, stores a first type of QoE measurement association information for multicast and broadcast service, MBS.

13. The method of claim 12, wherein the QoE measurement association information comprises:
a first type of QoE measurement report for MBS; and/or
a first type of QoE measurement configuration for MBS.

14. The method of claim 12 or 13, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

15. The method of claim 12, wherein transmitting the first indication information to the target base station comprises:
transmitting a retrieve UE context response message to a target base station, wherein the retrieve UE context response message comprises the first indication information.

16. A user equipment, UE, comprising: a memory, a transceiver, and a processor,
wherein the memory is used for storing a computer program; the transceiver is used for receiving and transmitting data under control of the processor; and the processor is used for reading the computer program in the memory and performing the following operations:
during a procedure of transmitting a complete message, transmitting first indication information to a target base station, wherein the first indication information is used to indicate that the UE stores a first type of quality of experience, QoE, measurement association information for multicast and broadcast service, MBS.

17. The UE of claim 16, wherein the QoE measurement association information comprises:
a first type of QoE measurement report for MBS; and/or
a first type of QoE measurement configuration for MBS.

18. The UE of claim 16 or 17, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

19. The UE of claim 16 or 17, wherein during the procedure of transmitting the complete message, transmitting the first indication information to the target base station comprises any of the following:
transmitting a radio resource control, RRC, connection establishment complete message to the target base station, wherein the RRC connection establishment complete message carries the first indication information;
transmitting a radio resource control, RRC, connection reconfiguration complete message to the target base station, wherein the RRC connection reconfiguration complete message carries the first indication information;
transmitting a radio resource control, RRC, connection resume complete message to the target base station, wherein the RRC connection resume complete message carries the first indication information; or
transmitting a radio resource control, RRC, connection re-establishment complete message to the target base station, wherein the RRC connection re-establishment complete message carries the first indication information.

20. A target base station, comprising: a memory, a transceiver, and a processor,
wherein the memory is used for storing a computer program; the transceiver is used for receiving and transmitting data under control of the processor; and the processor is used for reading the computer program in the memory and performing the following operations:
obtaining first indication information, wherein the first indication information is used to indicate that a user equipment, UE, stores a first type of quality of experience, QoE, measurement association information for multicast and broadcast service, MBS; and
performing QoE measurement configuration based on the first indication information.

21. The target base station of claim 20, wherein obtaining the first indication information comprises:
receiving the first indication information transmitted from the UE during a procedure of the UE transmitting a complete message; and/or
receiving a retrieve UE context response message transmitted from an old base station, wherein the retrieve UE context response message comprises the first indication information.

22. The target base station of claim 20 or 21, wherein the QoE measurement association information comprises:
a first type of QoE measurement report for MBS; and/or
a first type of QoE measurement configuration for MBS.

23. The target base station of claim 20 or 21, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

24. The target base station of claim 21, wherein receiving the first indication information transmitted from the UE during the procedure of the UE transmitting the complete message comprises any of the following:
receiving a radio resource control, RRC, connection establishment complete message transmitted from the UE, wherein the RRC connection establishment complete message carries the first indication information;
receiving a radio resource control, RRC, connection reconfiguration complete message transmitted from the UE, wherein the RRC connection reconfiguration complete message carries the first indication information;
receiving a radio resource control, RRC, connection resume complete message transmitted from the UE, wherein the RRC connection resume complete message carries the first indication information; or
receiving a radio resource control, RRC, connection re-establishment complete message transmitted from the UE, wherein the RRC connection re-establishment complete message carries the first indication information.

25. The target base station of claim 23, wherein the operations further comprise:
in case that the first indication information comprises the list of TMGIs, performing a second type of QoE measurement configuration for MBS for TMGIs that do not store the QoE measurement association information in the list of TMGIs.

26. The target base station of claim 23, wherein the operations further comprise:
in case that the first indication information comprises the measurement duration and/or the remaining measurement duration, after waiting for a given duration, performing a second type of QoE measurement configuration for MBS for the UE, wherein the given duration is determined based on the measurement duration and/or the remaining measurement duration.

27. An old base station, comprising: a memory, a transceiver, and a processor,
wherein the memory is used for storing a computer program; the transceiver is used for receiving and transmitting data under control of the processor; and the processor is used for reading the computer program in the memory and performing the following operations:
transmitting first indication information to a target base station, wherein the first indication information is used to indicate that a user equipment, UE, stores a first type of quality of experience, QoE, measurement association information for multicast and broadcast service, MBS.

28. The old base station of claim 27, wherein the QoE measurement association information comprises:
a first type of QoE measurement report for MBS; and/or
a first type of QoE measurement configuration for MBS.

29. The old base station of claim 27 or 28, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

30. The old base station of claim 27, wherein transmitting the first indication information to the target base station comprises:
transmitting a retrieve UE context response message to a target base station, wherein the retrieve UE context response message comprises the first indication information.

31. A user equipment, UE, comprising:
a first transmitting module, used for transmitting, during a procedure of transmitting a complete message, first indication information to a target base station, wherein the first indication information is used to indicate that the UE stores a first type of QoE measurement association information for multicast and broadcast service, MBS.

32. The UE of claim 31, wherein the QoE measurement association information comprises:
a first type of QoE measurement report for MBS; and/or
a first type of QoE measurement configuration for MBS.

33. The UE of claim 31 or 32, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

34. The UE of claim 31 or 32, wherein the first transmitting module is used for any of the following:
transmitting a radio resource control, RRC, connection establishment complete message to the target base station, wherein the RRC connection establishment complete message carries the first indication information;
transmitting a radio resource control, RRC, connection reconfiguration complete message to the target base station, wherein the RRC connection reconfiguration complete message carries the first indication information;
transmitting a radio resource control, RRC, connection resume complete message to the target base station, wherein the RRC connection resume complete message carries the first indication information; or
transmitting a radio resource control, RRC, connection re-establishment complete message to the target base station, wherein the RRC connection re-establishment complete message carries the first indication information.

35. A target base station, comprising:
an obtaining module, used for obtaining first indication information, wherein the first indication information is used to indicate that a user equipment, UE, stores a first type of QoE measurement association information for multicast and broadcast service, MBS; and
a processing module, used for performing QoE measurement configuration based on the first indication information.

36. The target base station of claim 35, wherein the obtaining module is used for:
receiving the first indication information transmitted from the UE during a procedure of the UE transmitting a complete message; and/or
receiving a retrieve UE context response message transmitted from an old base station, wherein the retrieve UE context response message comprises the first indication information.

37. The target base station of claim 35 or 36, wherein the QoE measurement association information comprises:
a first type of QoE measurement report for MBS; and/or
a first type of QoE measurement configuration for MBS.

38. The target base station of claim 35 or 36, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

39. The target base station of claim 36, wherein the obtaining module is used for any of the following:
receiving a radio resource control, RRC, connection establishment complete message transmitted from the UE, wherein the RRC connection establishment complete message carries the first indication information;
receiving a radio resource control, RRC, connection reconfiguration complete message transmitted from the UE, wherein the RRC connection reconfiguration complete message carries the first indication information;
receiving a radio resource control, RRC, connection resume complete message transmitted from the UE, wherein the RRC connection resume complete message carries the first indication information; or
receiving a radio resource control, RRC, connection re-establishment complete message transmitted from the UE, wherein the RRC connection re-establishment complete message carries the first indication information.

40. The target base station of claim 38, wherein the processing module is further used for:
in case that the first indication information comprises the list of TMGIs, performing a second type of QoE measurement configuration for MBS for TMGIs that do not store the QoE measurement association information in the list of TMGIs.

41. The target base station of claim 38, wherein the processing module is further used for:
in case that the first indication information comprises the measurement duration and/or the remaining measurement duration, after waiting for a given duration, performing a second type of QoE measurement configuration for MBS for the UE, wherein the given duration is determined based on the measurement duration and/or the remaining measurement duration.

42. An old base station, comprising:
a second transmitting module, used for transmitting first indication information to a target base station, wherein the first indication information is used to indicate that a user equipment, UE, stores a first type of quality of experience, QoE, measurement association information for multicast and broadcast service, MBS.

43. The old base station of claim 42, wherein the QoE measurement association information comprises:
a first type of QoE measurement report for MBS; and/or
a first type of QoE measurement configuration for MBS.

44. The old base station of claim 42 or 43, wherein the first indication information comprises any or any combination of the following:
a service type;
a list of temporary mobile group identities, TMGIs;
a measurement duration;
a remaining measurement duration;
a first identifier, used to indicate whether signaling-based QoE measurement configuration for MBS exists; or
a second identifier, used to indicate whether signaling-based QoE measurement report for MBS exists.

45. The old base station of claim 42, wherein the second transmitting module is used for:
transmitting a retrieve UE context response message to a target base station, wherein the retrieve UE context response message comprises the first indication information.

46. A processor readable storage medium storing a computer program for causing a processor to perform the method of any of claims 1 to 4, or to perform the method of any of claims 5 to 11, or to perform the method of any of claims 12 to 15.
